# EUROPEAN PATENT SPECIFICATION

(11) **EP 2 284 408 B1**
(45) Date of publication and mention of the grant of the patent: **02.07.2014**
(21) Application number: 09174935.8
(22) Date of filing: 03.11.2009
(51) Int. Cl.: B29C 45/14

(54) **Ball joint assembly for vehicle and manufacturing method thereof**
Kugelgelenkeinheit für Fahrzeug und entsprechendes Herstellungsverfahren
Assemblage de joint sphérique pour véhicule et son procédé de fabrication

(30) Priority: 10.08.2009 KR 20090073220
(43) Date of publication of application: 16.02.2011
(73) Proprietor: Iljin Co. Ltd., Gyeongsanbuk-do (KR)
(72) Inventor: Kwon, Tae-Sung, Gyeonsangbuk-do (KR)
(74) Representative: Kling, Simone

(56) References cited:
- EP-A2- 1 645 760
- GB-A- 152 023
- US-A- 3 522 976
- US-A- 3 977 740
- US-A- 5 947 627
- US-A- 6 082 721
- US-A1- 2004 046 295

## Description

### BACKGROUND OF THE INVENTION

### (a) Field of the Invention

The present invention relates to a suspension for a vehicle. More particularly, the present invention relates to a method of manufacturing a cross axes ball joint (or bushing ball joint) assembly mounted at arms or other components connected to the arms.

### (b) Description of the Related Art

Generally, a suspension absorbs vibration or impact transmitted from a road to a vehicle body. The suspension is provided with a rubber bushing or a ball joint assembly so as to connect an arm or a link to the vehicle body.

According to the rubber bushing, anti-vibration rubber is interposed between an inner tube and an outer tube so as to absorb the vibration or the impact.

In addition, the ball joint assembly is applied to a connecting portion between an upper arm and a lower arm or to a connecting portion between the lower arm and a side arm in the suspension.

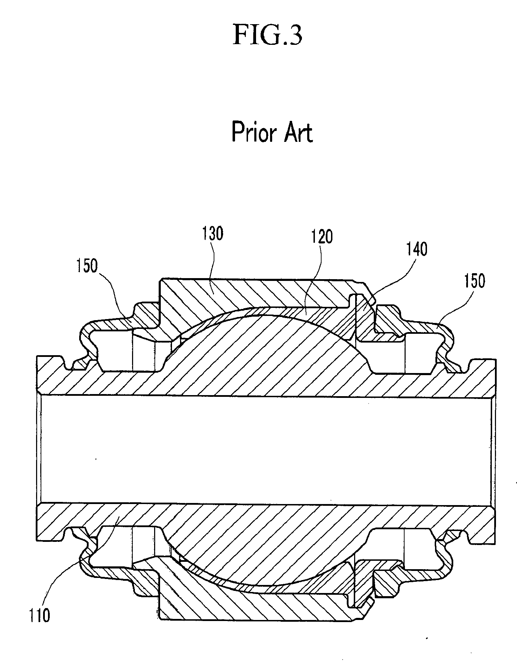

One type of ball joint assembly is a cross axes ball joint assembly. A conventional cross axes ball joint assembly is shown in FIG. 3.

The conventional cross axes ball joint assembly includes a hollow ball stud 110 formed of a ball at a middle portion thereof, a bearing 120 roll-contacted with an outer surface of the ball of the ball stud 110, an outer case 130 enclosing the bearing 120, a metal seat 140 mounted at an inner surface of the outer case 130, and a dust cover 150 fitted at both sides of the outer case 130.

According to the conventional ball joint assembly, roll-contact between the outer surface of the ball of the ball stud 110 and the bearing 120 occurs. That is, since the ball stud 110 rotates to a circumferential direction of the shaft and the bearing 120 is stopped, the ball stud 110 rolls with reference to an inner surface of the bearing 120.

According to the conventional ball joint assembly, the bearing 120 is press-fitted in the outer case 130, and the seat 140 is closely contacted to one end of the bearing 120 and is press-fitted in the outer case 130. At this time, since the conventional ball joint assembly is assembled by bending one end portion of the outer case 130 to the seat 140 (this process is called caulking), more components may be required than a conventional rubber bushing and manufacturing processes may be complex. Thus, manufacturing cost may be high and weight may be increased.

Since the manufacturing cost of the conventional ball joint assembly is higher than that of the rubber bushing, it is mainly applied to expensive vehicles and the rubber bushing is mainly applied to inexpensive vehicles.

Meanwhile, when the ball of the ball stud 110 is roll-contacted with the inner surface of the bearing 120, the bearing 120 should be stopped such that the conventional ball joint assembly displays its target performance. Since the conventional ball joint assembly is manufactured by the caulking process as described above, the bearing 120 may tumble or rotate with the ball stud 110 when the ball stud 110 rolls.

In addition, the caulking processes are performed by bending one end portion of the outer case 130 toward the seat 140 with high pressure and pushing the outer case 130 and the seat 140 strongly. The outer case 130 and the seat 140 are made of a metal material, and thus can endure high pressure. On the contrary, the bearing 120 is made of synthetic resin material, and thus cannot endure high pressure.

Therefore, performance may be deteriorated, and the bearing 120 and the outer case 130 may be damaged according to the conventional ball joint assembly.

Document US 2004/046295 A1 relates to a rubber bearing with anti-vibration system.

Document US 5,947,627 relates to a ball joint assembly having an integrally molded unitary or molded holder for the ball stud and link rod.

### SUMMARY OF THE INVENTION

The present invention has been made in an effort to provide a method having advantages of reducing manufacturing cost and enhancing performance by improving manufacturing processes of the ball joint assembly.

Hence, the present invention relates to a method of manufacturing a ball joint assembly according to claim 1.

Preferred embodiments are detailed in the dependent claims.

### BRIEF DESCRIPTION OF THE DRAWINGS

The drawings are included so as to explain an exemplary embodiment of the present invention, and the spirit of the present invention is not limited to the accompanying drawings.

FIG. 1A to FIG. 1D are perspective views showing a ball joint assembly for a vehicle and manufacturing processes of the same according to an exemplary embodiment of the present invention.

FIG. 2 is a cross-sectional view of a ball joint assembly for a vehicle according to FIG. 1.

FIG. 3 is a cross-sectional view of a conventional ball joint assembly for a vehicle.

### <Description of Reference Numerals Indicating Primary Elements in the Drawings>

| | | | |
|---|---|---|---|
| 10 | ball stud | 11 | hollow shaft |
| 13 | ball | 30 | bearing member |
| 33 | protrusions | 35 | coupling groove |
| 37 | coupling protrusion | 50 | seat member |
| 51 | molding portion | 53 | groove |
| 70 | outer case | 71 | knurling portion |
| 90 | dust cover | | |

### DETAILED DESCRIPTION OF THE EMBODIMENTS

The present invention will be described more fully hereinafter with reference to the accompanying drawings, in which exemplary embodiments of the invention are shown. As those skilled in the art would realize, the described embodiments may be modified in various different ways, all without departing from the scope of the present invention.

The present invention relates to a cross axes ball joint (or bushing ball joint) assembly.

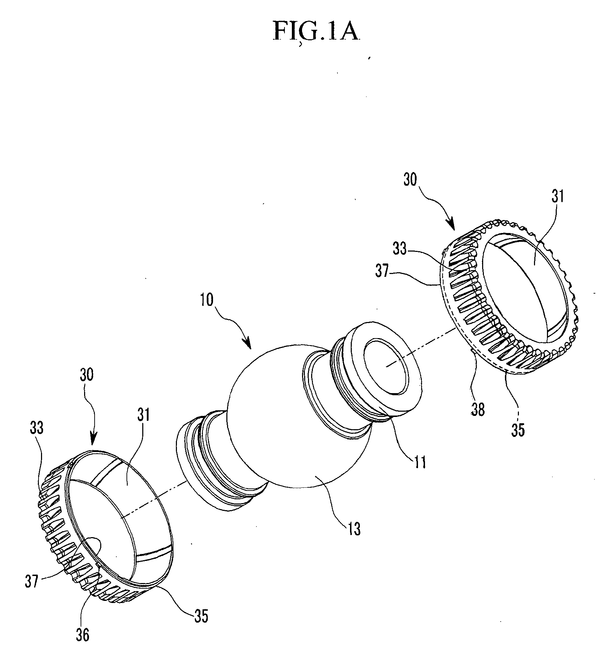

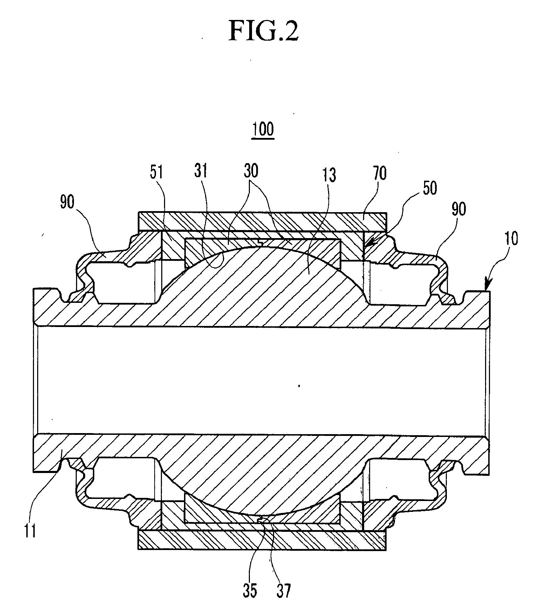

FIG. 1A to FIG. 1D are perspective views showing a ball joint assembly for a vehicle and manufacturing processes of the same according to an exemplary embodiment of the present invention, and FIG. 2 is a cross-sectional view of a ball joint assembly for a vehicle according to FIG. 1A to 1D.

Referring to the accompanying drawings, a ball joint assembly 100 is applied to a suspension for a vehicle that connects an axle to a vehicle body so as to alleviate vibration or impact transmitted from a road when driving and to enhance ride comfort.

Such a ball joint assembly 100 is mounted at a connecting portion between an upper arm and a lower arm or between the lower arm and a side arm in the suspension. In this embodiment, the cross axes ball joint assembly for connecting the arms to the vehicle body is shown as the ball joint assembly 100.

According to the exemplary embodiment of the present invention, processes for manufacturing the ball joint assembly 100 may be simplified, and fewer components may be used for manufacturing the same. Therefore, manufacturing cost and weight can be reduced.

For theses purposes, the ball joint assembly 100 basically includes a ball stud 10, bearing members 30, a seat member 50, an outer case 70, and dust covers 90.

According to an exemplary embodiment of the present invention, the outer case 70, the seat member 50, and the bearing members 30 are integrally formed, different from the conventional arts.

Referring to FIG. 1A to FIG. 1D and FIG. 2, constituent elements and coupling structures of the ball joint assembly 100 will be described in detail.

The ball stud 10 is a rotating shaft connected to a vehicle body by means of a mount bolt (not shown). As shown in FIG. 1A, the ball stud 10 includes a hollow shaft 11 having a hollow space therein, and a ball 13 integrally formed with the hollow shaft 11.

Here, the ball 13 formed on a middle portion of the hollow shaft 11 has a spherical shape, and thus the ball stud 10 can rotate in a circumferential direction of the hollow shaft 11 and can move axially with reference to the hollow shaft 11 by means of the ball 13.

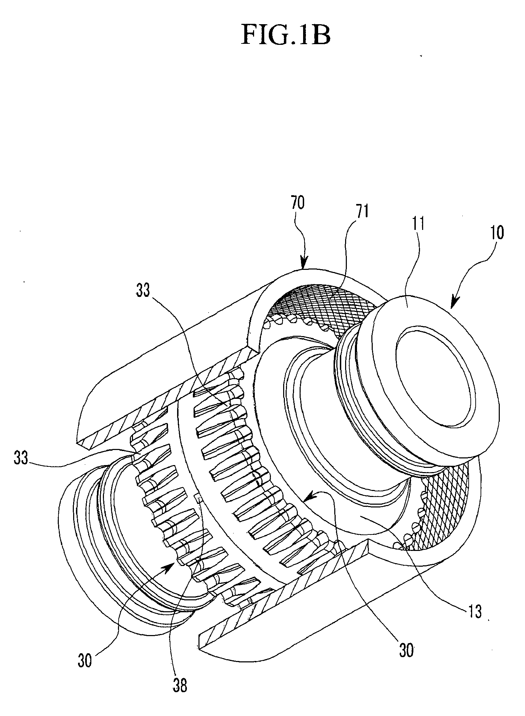

The bearing members 30, as shown in FIG. 1A and FIG. 1B, support circumferential rotation and axial movement of the hollow shaft 11. A pair of bearing members 30 are provided so as to be assembled or disassembled, and are mounted on an outer surface of the ball 13 so as to roll with reference to the ball 13. If the pair of bearing members 30 are mounted on the ball 13, the bearing members 30 enclose the ball 13.

That is, the pair of bearing members 30 are inserted axially into both sides of the hollow shaft 11 with reference to the ball 13 of the ball stud 10, and are roll-contactedly mounted on the outer surface of the ball 13.

Here, each bearing member 30 is made of a synthetic resin material such as plastic, and has an annular shape, both ends of which are opened. In addition, each bearing member 30 has a spherical inner surface 31 that is roll-contacted with the outer surface of the ball 13.

Further, each bearing member 30 is provided with a plurality of protrusions 33 formed at an exterior circumference thereof. The protrusions 33 are evenly protruded from the bearing members 30 along a circumferential direction thereof.

In this case, each bearing member 30 is roll-contacted with the ball 13 and has one end facing the other bearing member 30. The one end of one bearing member 30 is coupled with the one end of the other bearing member 30.

Accordingly, a coupling groove 35 and a coupling protrusion 37 are formed at the one end of each bearing member 30.

That is, the coupling groove 35 is formed at the one bearing member 30 (the right one in the drawings) at an inner circumference of the one end thereof, and the coupling protrusion 37 is formed at an outer circumference of the one bearing member 30 by forming the coupling groove 35.

In addition, the coupling groove 35 is formed at the other bearing member 30 (the left one in the drawings) at an outer circumference of the one end thereof, and the coupling protrusion 37 is formed at an inner circumference of the one bearing member 30 by forming the coupling groove 35.

When the pair of bearing members 30 are inserted axially into both ends of the hollow shaft 11 with reference to the ball 13 of the ball stud 10, the coupling groove 35 and the coupling protrusion 37 facing each other are coupled. Accordingly, the pair of bearing members 30 are roll-contacted with the outer surface of the ball 13.

In addition, a coupling clip 38 (FIG 1B) protruded axially from the right coupling protrusion 37 is formed at the bearing member 30, and a receiving recess 36 coupled with the coupling clip 38 is formed at the left bearing member 30. The coupling clip 38 and the receiving recess 36 as well as the coupling protrusion 37 and the coupling groove 35 prevent inflow of molten synthetic resin material into the bearing members 30 in a case of insert-molding.

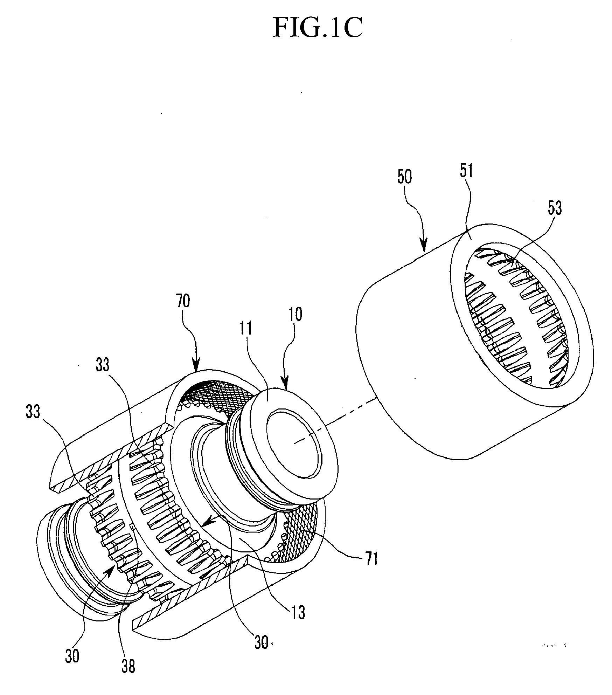

According to the present exemplary embodiment, the seat member 50, as shown in FIG. 1C, supports the exterior circumference of the bearing members 30 such that the bearing members 30 are closely contacted with the ball 13 of the ball stud 10.

The seat member 50 is made of a synthetic resin material, and is insert-molded between the outer case 70 and the bearing members 30.

That is, the seat member 50 is formed of a molded portion 51 that is interposed between an interior circumference of the outer case 70 and the exterior circumference of the bearing members 30, and integrally supports the outer case 70 and the bearing members 30.

In other words, the outer case 70 and the bearing members 30 are integrally assembled through the molded portion 51 according to the present exemplary embodiment.

The portion 51 is formed by insert-molding the molten synthetic resin material between the outer case 70 and the bearing members 30 in a state in which the bearing members 30 are roll-contactedly mounted on the ball 13 of the ball stud 10, and the outer case 70 is disposed apart from the exterior circumference of the bearing members 30.

Formation of the portion 51 is performed by well-known insert-molding processes, and thus a detailed description thereof will be omitted in this specification.

Since the seat member 50 is insert-molded between the interior circumference of the outer case 70 and the exterior circumference of the bearing members 30, a plurality of grooves 53 corresponding to the protrusions 33 of the bearing members 30 are formed at an interior circumference of the seat member 50.

Therefore, the exterior circumference of the bearing members 30 and the interior circumference of the seat member 50 may be strongly assembled.

In order to show the plurality of grooves 53 at the interior circumference of the seat member 50, the seat member 50 is drawn to be separated from the outer case 70 and the bearing members 30 in the drawings.

However, it is understood that the seat member 50 is integrally assembled to the outer case 70 and the bearing members 30 when the seat member 50 is insert-molded between the outer case 70 and the bearing members 30.

According to the present exemplary embodiment, the outer case 70 is an outer surface of the ball joint assembly 100, and is formed of an outer pipe enclosing the exterior circumference of the seat member 50.

The outer case 70, as shown in FIG. 1B and FIG. 1C, has a cylindrical shape, both ends of which are opened, and is made of metal material. The outer case 70 is integrally assembled with the seat member 50 through the molded portion 51.

A knurling portion 71 is formed at an interior circumference of the outer case 70 corresponding to the exterior circumference of the seat member 50 by a knurling process.

Since the seat member 50 is insert-molded between the interior circumference of the outer case 70 and the exterior circumference of the bearing members 30, the knurling portion 71 enhances coupling strength between the interior circumference of the outer case 70 and the exterior circumference of the seat member 50.

In the drawings, the exterior circumference of the seat member 50 is flat, but it is understood that a knurling portion corresponding to the knurling portion 71 of the outer case 70 is formed at the exterior circumference of the seat member 50 when the seat member 50 is insert-molded between the interior circumference of the outer case 70 and the exterior circumference of the bearing members 30.

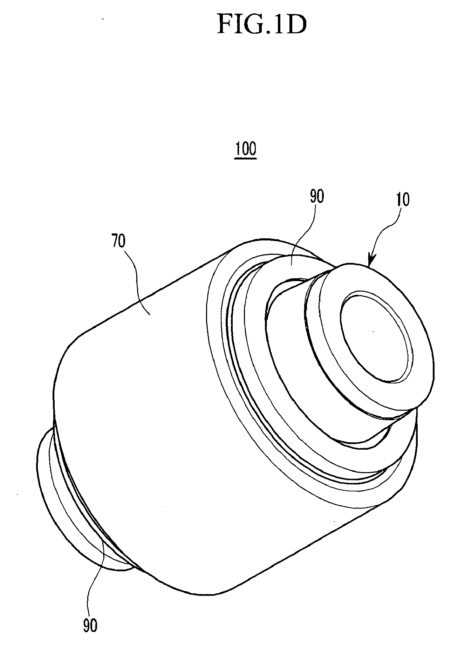

According to the present exemplary embodiment, the dust covers 90, as shown in FIG. 1D, cover between both ends of the outer case 70 and both ends of the ball stud 10.

The dust covers 90 are mounted at both ends of the outer case 70 by pushing the dust covers 90 into both ends of the seat member 50 and both ends of the ball stud 10.

Instead of mounting the dust cover 90 at both ends of the outer case 70 and both ends of the ball stud 10, sealing members (not shown) may be mounted between both ends of the outer case 70 and both ends of the ball stud 10.

A manufacturing method of ball joint assembly 100 for a vehicle according to an exemplary embodiment of the present invention will hereinafter be described in detail with reference to FIG. 1A to FIG. 1D.

Firstly, the ball stud 10 having the ball 13 at the middle portion of the hollow shaft 11 is prepared, and the bearing members 30 are axially inserted into both sides of the hollow shaft 11 with reference to the ball 13 as shown in FIG. 1A.

Then, in a state in which the bearing members 30 are roll-contactedly mounted on the outer surface of the ball 13, the coupling groove 35 and the coupling protrusion 37 facing each other are coupled as shown in FIG. 1B. At this time, the coupling clip 38 snaps into the receiving recess 36 so as to strengthen the coupling between the bearing members 30.

After that, the ball stud 10 coupled with the bearing members 30 is set in an insert mold (not shown), and the outer case 70 is disposed apart from the exterior circumference of the bearing members 30 as shown in FIG. 1B.

That is, the ball stud 10 is disposed in the outer case 70, and the exterior circumference of the bearing members 30 is disposed apart from the interior circumference of the outer case 70 by a predetermined distance.

That is, a predetermined insert-molding region is set between the outer case 70 and the bearing members 30. Then, the molten synthetic resin material is inserted into the insert-molding region, and the molded portion 51 of the seat member 50 is formed as shown in FIG. 1C.

At this stage, since the bearing members 30 are coupled with each other through the coupling groove 35 and the coupling protrusion 37 on the outer surface of the ball 13, the molten synthetic resin material cannot flow in a gap between the bearing members 30. Since the coupling clip 38 snaps into the receiving recess 36, the coupling between the bearing members 30 is strengthened and flow of the molten synthetic resin material into the gap between the bearing members 30 is further prevented.

In addition, since the plurality of protrusions 33 are formed at the exterior circumference of the bearing members 30, the plurality of grooves 53 corresponding to the protrusions 33 is formed at the interior circumference of the seat member 50 when insert-molding proceeds. Therefore, the bearing members 30 and the seat member 50 are integrally assembled by the plurality of protrusions 33 and grooves 53.

Also, since the knurling portion 71 is formed at the interior circumference of the outer case 70, the outer case 70 and the seat member 50 are integrally assembled by the knurling portion 71.

Finally, the dust covers 90 are pushed into both ends of the ball stud 10 so as to be closely contacted to both ends of the seat member 50 as shown in FIG. 1D. Thereby, the ball joint assembly 100 according to the exemplary embodiment of the present invention is completely manufactured.

Since the seat member 50 formed of the molding portion 51 is integrally insert-molded between the outer case 70 and the bearing members 30 according to the exemplary embodiment of the present invention, the outer case 70 and the bearing members 30 are integrally assembled through the molded portion 51.

Therefore, manufacturing processes and components used for manufacturing the ball joint assembly 100 may be reduced, different from the conventional art in which the ball joint assembly is assembled through a caulking processes. According to the exemplary embodiment of the present invention, manufacturing cost and weight may be reduced.

That is, the ball joint assembly 100 according to the present exemplary embodiment can be manufactured with a similar cost to a conventional rubber bushing. Therefore, the ball joint assembly 100 according to the present exemplary embodiment may be applied to an inexpensive vehicle as well as an expensive vehicle.

In addition, since the plurality of protrusions 33 are formed at the exterior circumference of the bearing members 30 according to the present exemplary embodiment, the plurality of grooves 53 corresponding to the protrusions 33 are formed at the interior circumference of the seat member 50 when the seat member 50 is insert-molded between the outer case 70 and the bearing members 30, and thus, the bearing members 30 and the seat member 50 may be strongly coupled.

Further, since the knurling portion 71 is formed at the interior circumference of the outer case 70 according to the present exemplary embodiment, the outer case 70 and the seat member 50 may be strongly coupled when the seat member 50 is insert-molded between the outer case 70 and the bearing members 30.

Since the bearing members 30, the seat member 50, and the outer case 70 are integrally and strongly assembled through the molding portion 51 according to the present exemplary embodiment, separation, rotation, or axial movement of the seat member 50 or the bearing members 30 may be prevented. Therefore, strength of the bearing members 30 may be improved.

Finally, since the outer case 70 is not bent toward the seat member 50, breakage of the bearing members 30 may be prevented.

According to an exemplary embodiment of the present invention, the outer case and the bearing members are integrally assembled by insert-molding the seat member therebetween. Therefore, manufacturing processes, components used for manufacturing the ball joint assembly, manufacturing cost, and weight may be reduced, and performance may be improved.

While this invention has been described in connection with what is presently considered to be practical exemplary embodiments, it is to be understood that the invention is not limited to the disclosed embodiments, but, on the contrary, is intended to cover various modifications and equivalent arrangements included within the scope of the appended claims.

## Claims

1. A method of manufacturing a ball joint assembly for a vehicle, the ball joint assembly comprising:
- a ball stud (10) having a ball (13) on a shaft (11),
- a bearing member (30) roll-contacted with the ball of the ball stud, and presenting a plurality of protrusions (33) at the exterior circumference thereof along a circumferential direction,
- a seat member (50) supporting an exterior circumference of the bearing member (30), wherein the seat member (50) is made of a synthetic resin material, and presents grooves (53) corresponding to the protrusions (33) at an interior circumference thereof, and
- an outer case (70) enclosing the seat member,
the method comprising:
- the outer case (70) and the bearing member (30) are separately provided,
- the seat member (50) is formed of a molded portion that is insert-molded between the outer case and the bearing member,
- the outer case (70) is made of a metal material, and presents a knurled portion (71) at an interior circumference thereof,
- setting the outer case (70) at an exterior circumferential side of the bearing member (30); and
- forming the seat member (50) by insert-molding, in a state in which a predetermined molding region is set between the bearing member (30) and the outer case apart from the bearing member (30),
**characterized:**
- **in that** the bearing member (30) consists of a pair of bearing members (30), wherein each bearing member (30) is made of a synthetic resin material;
- by mounting the pair of bearing members on the ball stud (10); and
- by forming the seat member (50) by insert-molding a molten synthetic resin material into the predetermined molding region.

2. The method of claim 1, further comprising mounting a dust cover at both sides of the outer case.

3. The method of claim 1 or 2, wherein the outer case (70) and the bearing members (30) are integrally assembled through the molded portion.

4. The method of anyone of the previous claims, wherein the pair of bearing members (30) are inserted into both sides of the shaft (11) with reference to the ball (10),
wherein one bearing member (30) is provided with a coupling groove (35) at one end facing the other bearing member, and the other bearing member is provided with a coupling protrusion (37) corresponding to the coupling groove at one end facing the one bearing member.

5. The method of claim 4, wherein the one bearing member (30) further comprises a coupling clip (38) axially protruded from the coupling protrusion (37), and the other bearing member (30) further comprises a receiving recess (36) into which the coupling clip snaps.

## Patentansprüche

1. Verfahren zum Herstellen einer Kugelgelenkbaugruppe für ein Fahrzeug, wobei die Kugelgelenkbaugruppe umfasst:
- einen Kugelbolzen (10), der eine Kugel (13) auf einer Welle (11) aufweist,
- ein Lagerelement (30), das mit der Kugel des Kugelbolzens in Rollkontakt steht und eine Mehrzahl von Vorsprüngen (33) am Außenumfang davon entlang einer Umfangsrichtung aufweist,
- ein Sitzelement (50), das einen Außenumfang des Lagerelements (30) trägt, wobei das Sitzelement (50) aus einem synthetischen Harzmaterial gebildet ist und Nuten (53) aufweist, die den Vorsprüngen (33) an einem Innenumfang davon entsprechen, und
- ein Außengehäuse (70), das das Sitzelement umschließt, wobei das Verfahren umfasst:
- das Außengehäuse (70) und das Lagerelement (30) werden getrennt bereitgestellt,
- das Sitzelement (50) wird aus einem geformten Abschnitt gebildet, der zwischen dem Außengehäuse und dem Lagerelement umgespritzt wird,
- das Außengehäuse (70) wird aus einem Metallmaterial gebildet und weist einen geriffelten Abschnitt (71) an einem Innenumfang davon auf,
- Platzieren des Außengehäuses (70) an der Außenumfangsseite des Lagerelements (30); und
- Bilden des Sitzelements (50) durch Umspritzen in einem Zustand, in dem ein vorab definierter Formungsbereich zwischen dem Lagerelement (30) und dem Außengehäuse vom Lagerelement (30) abgesondert festgelegt ist,
**dadurch gekennzeichnet, dass**:
- das Lagerelement (30) aus einem Paar von Lagerelementen (30) besteht, wobei jedes Lagerelement (30) aus einem synthetischen Harzmaterial hergestellt ist;
- das Paar von Lagerelementen am Kugelbolzen (10) befestigt wird; und
- das Sitzelement (50) durch Umspritzen eines geschmolzenen synthetischen Harzmaterials in den vorab definierten Formungsbereich gebildet wird.

2. Verfahren nach Anspruch 1, das darüber hinaus das Befestigen eines Staubschutzes an beiden Seiten des Außengehäuses umfasst.

3. Verfahren nach Anspruch 1 oder 2, wobei das Außengehäuse (70) und die Lagerelemente (30) durch den geformten Abschnitt integral zusammengefügt werden.

4. Verfahren nach einem der vorstehenden Ansprüche, wobei das Paar von Lagerelementen (30) in beide Seiten der Welle (11) in Bezug auf die Kugel (10) eingesetzt wird,
wobei ein Lagerelement (30) mit einer Verbindungsnut (35) an einem Ende versehen ist, das dem anderen Lagerelement zugewandt ist, und wobei das andere Lagerelement mit einem Verbindungsvorsprung (37) versehen ist, der der Verbindungsnut an einem Ende entspricht, das dem Lagerelement zugewandt ist.

5. Verfahren nach Anspruch 4, wobei das eine Lagerelement (30) darüber hinaus eine Verbindungsklemme (38) umfasst, die vom Verbindungsvorsprung (37) axial vorsteht, und wobei das andere Lagerelement (30) darüber hinaus eine Aufnahmeausnehmung (36) umfasst, in die die Verbindungsklemme einschnappt.

## Revendications

1. Procédé pour fabriquer un ensemble de joint sphérique pour un véhicule, l'ensemble de joint sphérique comprenant :
une tige à rotule (10) ayant une rotule (13) sur un arbre (11),
un élément de palier (30) en contact roulant avec la rotule de la tige à rotule, et présentant une pluralité de saillies (33) au niveau de sa circonférence extérieure le long d'une direction circonférentielle,
un élément de siège (50) supportant une circonférence extérieure de l'élément de palier (30), dans lequel l'élément de siège (50) est réalisé avec un matériau en résine synthétique, et présente des rainures (53) correspondant aux saillies (33) au niveau de sa circonférence intérieure, et
un boîtier externe (70) enfermant l'élément de siège,
le procédé comprenant :
le boîtier externe (70) et l'élément de palier (30) sont fournis séparément,
l'élément de siège (50) est formé avec une partie moulée qui est moulée par insertion entre le boîtier externe et l'élément de palier,
le boîtier externe (70) est réalisé avec un matériau métallique, et présente une partie moletée (71) au niveau de sa circonférence intérieure,
installer le boîtier externe (70) d'un côté circonférentiel extérieur de l'élément de palier (30) ; et
former l'élément de siège (50) par moulage par insertion, dans un état dans lequel une région de moulage prédéterminée est placée entre l'élément de palier (30) et le boîtier externe à distance de l'élément de palier (30),
**caractérisé :**
**en ce que** l'élément de palier (30) se compose d'une paire d'éléments de palier (30), dans lequel chaque élément de palier (30) est réalisé avec un matériau en résine synthétique ;
par l'étape consistant à monter la paire d'éléments de palier sur la tige à rotule (10) ; et
par l'étape consistant à former l'élément de siège (50) en moulant par insertion un matériau en résine synthétique en fusion dans la région de moulage prédéterminée.

2. Procédé selon la revendication 1, comprenant en outre l'étape consistant à monter un couvercle anti-poussière des deux côtés du boîtier externe.

3. Procédé selon la revendication 1 ou 2, dans lequel le boîtier externe (70) et les éléments de palier (30) sont assemblés de manière solidaire par le biais de la partie moulée.

4. Procédé selon l'une quelconque des revendications précédentes, dans lequel la paire d'éléments de palier (30) sont insérés des deux côtés de l'arbre (11) en référence à la rotule (10),
dans lequel un élément de palier (30) est prévu avec une rainure de couplage (35) au niveau d'une extrémité faisant face à l'autre élément de palier, et l'autre élément de palier est prévu avec une saillie de couplage (37) correspondant à la rainure de couplage au niveau d'une extrémité faisant face au premier élément de palier.

5. Procédé selon la revendication 4, dans lequel le premier élément de palier (30) comprend en outre une attache de couplage (38) axialement en saillie à partir de la saillie de couplage (37), et l'autre élément de palier (30) comprend en outre un évidement de réception (36) dans lequel l'attache de couplage s'emboîte.
